# FASCICULE DE BREVET EUROPEEN

(11) **EP 0 549 443 B1**
(45) Date de publication et mention de la délivrance du brevet: **21.05.1997**
(21) Numéro de dépôt: 92403482.0
(22) Date de dépôt: 21.12.1992
(51) Int. Cl.: C02F 3/12, C02F 3/28, C02F 3/30

(54) **Procédé d'épuration biologique de liquides chargés d'impuretés**
Verfahren zur biologischen Reinigung von mit Verunreinigungen belasteten Flüssigkeiten
Process for the biological purification of impurity-loaded liquids

(30) Priorité: 26.12.1991 FR 9116155
(43) Date de publication de la demande: 30.06.1993
(73) Titulaire: LYONNAISE DES EAUX, F-92000 Nanterre (FR)
(72) Inventeur: Audic, Jean-Marc, F-78700 Conflans Sainte Honorine (FR); Galvez, Laure, F-92000 Nanterre (FR); Blanc, Joelle, F-78400 Chatou (FR)
(74) Mandataire: Cournarie, Michèle

(56) Documents cités:
- EP-A- 0 105 788
- EP-A- 0 162 796
- EP-A- 0 175 568
- EP-A- 0 250 998
- WO-A-92/04285
- FR-A- 2 342 785
- US-A- 3 829 377

## Description

L'invention concerne un procédé d'épuration biologique de liquides chargés d'impuretés, en particulier d'impuretés organiques ou minérales, notamment les eaux usées et les installations de mise en oeuvre d'un tel procédé.

On sait depuis longtemps effectuer l'épuration des eaux usées urbaines par voie biologique, et l'on est passé au cours des dernières années des procédés à boues activées en cultures libres à ceux mettant en oeuvre des cultures fixées, pour réduire la taille des installations.

Dans les cultures fixées en lits fixes, les bactéries sont fixées sur des matériaux minéraux naturels (argile, sable...) qui sont traversés dans un volume déterminé de réacteur, par l'eau à traiter, avec si nécessaire un apport d'air pour le développement des bactéries. Du fait de sa forte teneur en matières particulaires l'eau à traiter doit subir une filtration et un pré-traitement pour diminuer le colmatage des distributeurs et de la masse filtrante. En outre, l'excès de biomasse qui se développe dans le lit doit être enlevé périodiquement ce qui provoque un fonctionnement discontinu du réacteur biologique.

Certains réacteurs ont été développés pour éviter le fonctionnement séquentiel des lits fixes, en fluidisant par l'eau à traiter le lit de matériau support. Cette disposition suppose le choix de matériau support de granulométrie très fine. De nouveau la nécessité impérieuse de réaliser une distribution homogène de l'eau distribuée au bas du réacteur, implique de réaliser un pré-traitement poussé pour éviter tout risque de colmatage des distributeurs qui déstabiliserait le lit de particules.

En outre une stratification de la biomasse peut s'instaurer dans le réacteur, induisant une concentration plus importante du matériau support dans la partie inférieure; l'attrition y étant plus importante, la quantité de biofilm qui se développe sur les particules de support est limitée, et l'action épuratrice s'en ressent. A l'inverse, la concentration moins importante en haut du lit provoque une accumulation de biofilm sur les particules.

Cette accumulation induit progressivement une perte des particules dont les caractéristiques de taille et de densité ont été suffisamment modifiées par la croissance du biofilm pour qu'elles soient entraînées par l'eau qui traverse le réacteur. Certains dispositifs ont été mis au point (FR-A 2 626 868) pour régénérer et réinjecter les particules qui s'échappent, mais ils compliquent la structure du réacteur.

EP-A-0 250 998 décrit un réacteur dans lequel des particules de support sont mises en mouvement par un gaz dans un liquide à épurer, des biocatalyseurs ou des microorganismes étant immobilisés sur les particules de support.

Un autre problème se pose lorsque l'on veut effectuer simultanément l'épuration des matières carbonées et celle des matières azotées ammoniacales, problème lié aux temps de reproduction différents des bactéries en cause.

Les bactéries du carbone, qui sont des bactéries hétérotrophes, ont un taux de croissance beaucoup plus rapide que les bactéries de l'azote, qui sont des bactéries autotrophes. Les bactéries du carbone colonisent donc très rapidement les particules de support, empêchant les bactéries autotrophes de s'y fixer. Ces dernières sont alors éliminées progressivement avec l'eau traitée et la nitrification (transformation de N ammoniacal en N nitrique) ne se fait plus. On perd là l'avantage des cultures fixées qui permettent de de dissocier la contrainte cinétique (temps de réaction pour la transformation des impuretés) de la contrainte physiologique (âge de la biomasse ou durée de séjour de celle-ci dans le réacteur, qui doit être supérieur au temps de reproduction de la biomasse, en vue d'assurer la pérénnité de celle-ci).

L'invention résoud ces problèmes en fournissant un procédé selon la revendication 1.

En utilisant un matériau ayant les caractéristiques de granulométrie et de masse volumique telles que mentionnées précédemment, il est possible de mettre ce matériau en lit turbulent sous l'action d'un gaz. On considère que la turbulence est obtenue lorsque toutes les particules de matériau support sont en mouvement et qu'elles parcourent l'intégralité du réacteur. Le liquide à traiter, n'étant pas utilisé pour la mise en mouvement du matériau support, peut être introduit dans le réacteur d'une manière quelconque (par exemple à l'aide d'une simple conduite d'amenée) et à un endroit quelconque et ne nécessite donc pas de pré-traitement pour éviter les risques de colmatage des distributeurs de liquide. De ce fait, on trouve dans le réacteur les flocs qui existent dans le liquide chargé d'impuretés et/ou des flocs introduits séparément et provenant d'un clarificateur du liquide traité placé en aval, par exemple.

Du fait de l'état turbulent qui est maintenu dans la totalité du réacteur biologique, on constate un effet de cisaillement continuel au sein du réacteur biologique, cisaillement qui limite en permanence la croissance du biofilm en évitant la modification de la taille et de la densité des particules en suspension. Il n'y a donc pas de stratification des particules et l'état turbulent reste stable dans tout le réacteur, avec une répartition uniforme de la biomasse active. Ceci est un avantage important par rapport aux lits fluidisés dans lesquels le biofilm n'est pas toujours distribué de manière uniforme, ce qui rend la réaction de dégradation imparfaite .

Un tel procédé permet la réalisation d'une épuration aérobie ainsi que la réalisation d'une épuration anaérobie. En présence de bactéries aérobies, le gaz de mise en turbulence sera de l'air ou un gaz inerte additionné de la quantité nécessaire d'oxygène. Par contre en présence de bactéries anaérobies, le gaz de mise en turbulence sera un gaz non oxygéné et avantageusement le gaz métabolite formé lors de l'épuration (par exemple le mélange contenant essentiellement du méthane obtenu par utilisation de bactéries méthanogènes).

Dans le cas de l'épuration simultanée, en milieu aérobie, des matières carbonées et des matières azotées ammoniacales, on constate de manière inattendue que les bactéries hétérotrophes se reproduisent essentiellement dans le liquide en formant des flocs, tandis que les bactéries autotrophes se fixent sur le support alors disponible. Bien entendu, si le gaz mis en turbulence n'est pas un gaz contenant de l'oxygène, la quantité d'oxygène nécessaire au développement des bactéries du carbone est injectée dans le réacteur.

On sait que le maintien d'un biofilm mince sur des particules de support est en outre indispensable pour un bon fonctionnement d'un tel système aérobie. Les matériaux solides en contact avec les liquides chargés d'impuretés se recouvrent d'un biofilm dont l'épaisseur dépend du régime hydraulique. L'oxygène dissous dans le liquide ainsi que le substrat (impureté à métaboliser par les bactéries) diffusent dans le film biologique à l'interface liquide-solide. L'oxygène présent est rapidement épuisé à la traversée de la couche périphérique du biofilm, dite sone active. Dans cette sone, la biomasse est continuellement renouvelée et joue un rôle épurateur par un mécanisme aérobie. La sone la plus profonde, en contact avec le support, se trouve en anaérobiose lorsque le biofilm est trop épais et de ce fait devient inactive. Cette sone anaérobie peut en outre être nuisible car du fait de l'inactivation et de la lyse cellulaire, il peut se former des produits solubles ou insolubles qui dégradent la qualité de l'eau traitée.

L'attrition due au régime turbulent dans le réacteur de mise en oeuvre du procédé de la présente invention permet donc le maintien d'une couche active peu épaisse, et a également un effet de lavage continuel des particules ayant fixé des bactéries autotrophes. La biomasse libre est pour l'essentiel constituée par des flocs contenant des bactéries hétérotrophes et par le biofilm en excès qui est continuellement éliminé par attrition. On a donc un lavage continu du lit turbulent de particules de support, la biomasse en excès étant prélevée en même temps que le liquide traité. Il n'est donc pas nécessaire d'arrêter le fonctionnement du réacteur pour régénérer le lit de particules de support.

En outre, comme du fait de l'attrition les propriétés physiques des particules ne sont pas modifiées en cours de traitement, on peut réaliser une séparation aisée du liquide et des particules, soit par gravité (zone de tranquillisation dépourvue d'injection gazeuse, par exemple) soit physiquement (par exemple grille, tamis, filtre etc.).

On va maintenant décrire l'invention en se référant aux dessins annexés dans lesquels :
la figure 1 est une représentation schématique d'un dispositif de mise en oeuvre du procédé selon l'invention, et
la figure 2 est une représentation schématique d'un autre mode de réalisation du procédé selon l'invention.

Dans un réacteur 1 dans lequel on a placé un matériau granulaire 2 et que l'on a ensemencé en bactéries du carbone et bactéries de l'azote, on insuffle de l'air pour mettre le matériau en lit turbulent. Comme indiqué précédemment, les particules de support ont une granulométrie de 1 à 5 mm et une masse volumique de 1,01 à 1,3 g/cm³ et peuvent avoir une quelconque composition chimique pour autant que le support soit inerte dans la réaction. On peut en particulier utiliser des particules de matière plastique de densité correspondante, par exemple des particules de matière plastique expansée. Un exemple type de matériau approprié est le matériau granulaire décrit dans FR-A 2 612 085 mais l'invention n'est nullement limitée à l'utilisation de ce matériau et tout matériau ayant les propriétés physiques sus-indiquées convient.

De l'air est insufflé par la partie inférieure du réacteur en quantité suffisante pour mettre le matériau 2 en turbulence. On a constaté que jusqu'à un taux de remplissage du réacteur (rapport du volume réel du matériau et du volume du réacteur) allant jusqu'à 25%, la vitesse nécessaire pour mettre le matériau en turbulence est de l'ordre de 20 m par heure. Du fait de la faible masse volumique du matériau utilisé, l'énergie nécessaire à la mise en turbulence du matériau est moindre que celle nécessaire pour la mise en turbulence des matériaux minéraux utilisés de manière classique dans le traitement des eaux (sable, argile,..). Du liquide à traiter, par exemple de l'eau provenant d'un réseau de collecte des eaux usées urbaines, est introduit par la conduite 3 dans le réacteur 1, sans précaution particulière (par exemple traitement préalable ou filtration fine) et en tout endroit approprié du réacteur. Après un temps de séjour suffisant qui est fonction de la qualité de l'eau brute à traiter, le liquide traité est amené par une conduite 6 dans un bac 4 de récupération du matériau support, d'où ce dernier est recyclé par la conduite 5 en bas du réacteur 1, puis le liquide traité est conduit dans un clarificateur 7 au sein duquel il est séparé par décantation de la biomasse qu'il contient. Le liquide traité et clarifié est évacué par une conduite 10. Les boues constituant la biomasse sont évacuées du clarificateur 7 par une conduite 8 et partiellement recyclées par la conduite 9 à l'arrivée de liquide vers le réacteur 1.

Lorsque le liquide est introduit dans le réacteur avec éventuellement des boues provenant du clarificateur 7, les bactéries qui ont été introduites vont, dans le cas des bactéries du carbone hétérotrophes, se développer à l'état libre sur le floc en consommant tout le carbone disponible du fait de leur taux de croissance rapide tandis que les bactéries de l'azote autotrophes qui ont un taux de croissance beaucoup plus faible et qui ne peuvent subsister en phase libre, vont se fixer sur le matériau support pratiquement totalement disponible pour elles.

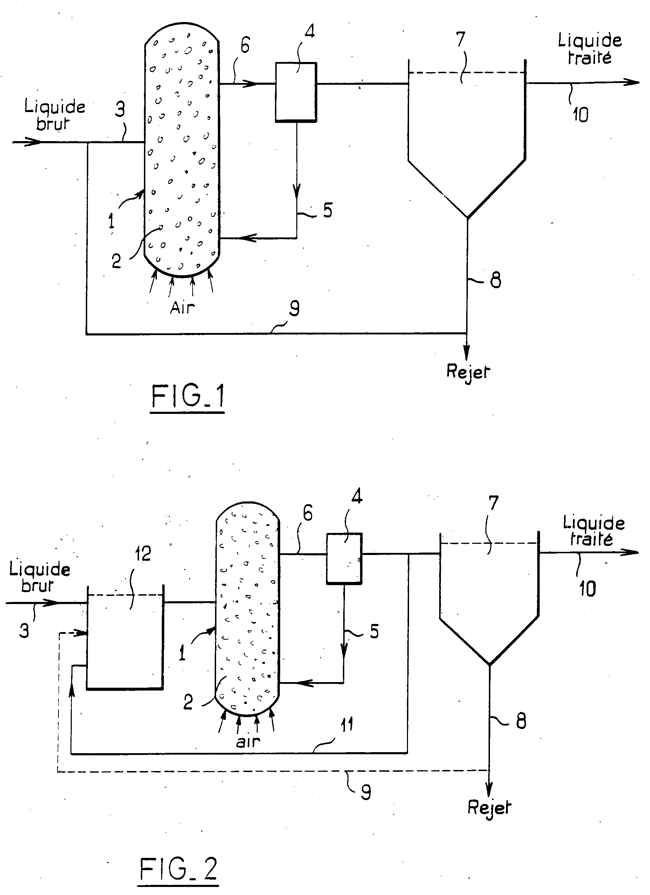

La figure 2 représente une installation similaire à celle de la figure 1, mais dans laquelle on prévoit une étape de dénitrification (transformation de l'azote nitrique en azote moléculaire) dans un bac 12 situé en amont du réacteur 1 et auquel on recycle partiellement les boues ou biomasse récupérées dans le clarificateur 7 ainsi qu'une partie du liquide traité mais non clarifié, les recyclages se faisant par les conduites 9 et 11. Une telle installation permet de réduire la teneur en nitrates du liquide traité lorsque cette teneur est soumise à des limitations règlementaires.

Les exemples suivants illustrent la mise en oeuvre du cas particulier de l'élimination simultanée des impuretés carbonées et azotées ammoniacales mais sont simplement illustratifs et ne limitent en aucune façon la portée de l'invention.

### EXEMPLE 1

On réalise une expérience dans une installation pilote en utilisant les eaux résiduaires d'une ville aryenne, installation réalisée selon le schéma de la figure 1 avec un réacteur d'un volume de 1 m³, d'une hauteur de 4 m et d'un diamètre de 0,6 m. Le matériau support utilisé est un matériau granulaire selon FR-A 2 612 085 sous forme de billes de diamètre 3,60 mm et ayant une masse volumique de 1,04 g/cm³. On utilise un taux de remplissage de 15%. Les paramètres de fonctionnement et les résultats sont donnés dans le tableau suivant.

### EXEMPLE 2

On prépare une installation pilote selon le schéma de la figure 2 (recyclage à un bac de dénitrification 12) en utilisant le même réacteur et les mêmes eaux résiduaires que dans l'exemple 1. Les paramètres de fonctionnement et les résultats sont donnés dans le tableau suivant.

**TABLEAU**

| | Exemple 1 | Exemple 2 |
|---|---|---|
| Débit d'alimentation en eaux résiduaires 3 | 250 l/h | 250 l/h |
| Temps de séjour dans le réacteur 1 | 4 h | 4 h |
| Recyclage du débit du clarificateur 7 au réacteur 1 via 9 | 100 % (250 l/h) | -- |
| Recyclage du débit du clarificateur 7 au bac 12 via 11 | -- | 100 % (250 l/h) |
| Elimination de N total | 85 % | 90 % |
| Elimination de N ammoniacal | 85 % | 90 % |
| Elimination de la DCO | 80 % | 80 % |
| Elimination des matières en suspension | 80 % | 80 % |

Des installations similaires peuvent être mis en oeuvre sans difficulté par l'homme de métier pour le traitement d'eaux résiduaires par des bactéries méthanogènes, en utilisant par exemple comme gaz de mise en turbulence le gaz formé par l'action des bactéries.

L'invention a été décrite de façon détaillée dans son application au traitement bactérien d'eaux résidulaires mais il est entendu qu'elle s'applique à tout liquide chargé d'impuretés susceptibles d'être dégradées par des bactéries.

## Revendications

1. Procédé d'épuration biologique des liquides fortement chargés en impuretés organiques ou minérales à l'aide de bactéries, en présence d'un support solide où des bactéries peuvent se fixer, caractérisé en ce qu'il comprend les étapes consistant à:
(A) introduire en continu le liquide à épurer contenant des flocs et n'ayant pas subi de filtration préalable, dans un réacteur en milieu aérobie,dans lequel un support solide de granulométrie comprise entre 1 et 5 mm et d'une masse volumique comprise entre 1,01 et 1,3 g/cm³ a été mis en turbulence par insufflation de gaz en présence de bactéries, en respectant les conditions nécessaires au métabolisme des bactéries, utilisation étant faite, dans le réacteur, à la fois des bactéries de l'azote qui sont autotrophes et se fixeront sur le support et des bactéries du carbone qui sont hétérotrophes et qui se reproduiront essentiellement sur les flocs dans le liquide; et
(B) prélever en continu du réacteur le liquide traité après un temps de séjour suffisant pour une épuration efficace des impuretés contenues dans le liquide à épurer.

2. Procédé d'épuration biologique selon la revendication 1, utilisant des bactéries aérobies, caractérisé en ce qu'on utilise comme gaz de mise en turbulence de l'air, qui fournit également les conditions aérobies nécessaires aux bactéries.

3. Procédé selon la revendication 1 ou 2, caractérisé en ce que le liquide traité traverse un bac de récupération du support solide, qui est recyclé dans le réacteur.

4. Procédé selon l'une quelconque des revendications précédentes, caractérisé en ce que le liquide traité est envoyé dans un bac clarificateur d'où l'on sépare la biomasse qui est partiellement recyclée au réacteur.

5. Procédé selon l'une quelconque des revendications précédentes, caractérisé en ce qu'il est prévu une étape de dénitrification dans un bac de dénitrification situé en amont du réacteur d'épuration et dans lequel on recycle au moins partiellement le liquide prélevé du réacteur biologique et au moins une partie des boues recueillies dans le bac clarificateur.

## Claims

1. A method of biologically purifying liquids that are heavily contaminated with organic or inorganic impurities, by using bacteria in the presence of a solid support on which bacteria can be fixed, the method being characterized in that it comprises the following steps:
(A) the liquid to be purified containing flocculation is continuously injected without prior filtering into an aerobic medium reactor in which a solid support having grain size lying in the range 1 mm to 5 mm and density lying in the range 1·01 g/cm³ to 1·3 g/cm³ has been put into turbulent motion by blowing in gas in the presence of bacteria and while satisfying the conditions required by the metabolism of the bacteria, use being made, within the reactor, both of nitrogen bacteria that are autotrophic and that fix on the support, and of carbon bacteria that are heterotrophic and that reproduce essentially on the flocculation in the liquid; and
(B) the treated liquid is taken continuously from the reactor after a transit time that is long enough to ensure purification of the impurities contained in the liquid to be purified.

2. A biological purification method according to claim 1 using aerobic bacteria, the method being characterized in that the gas used for establishing turbulent motion is air, thereby also providing the aerobic conditions required by the bacteria.

3. A method according to claim 1 or 2, characterized in that the treated liquid passes through a solid support recovery tank, with the solid support being recycled into the reactor.

4. A method according to any preceding claim, characterized in that the treated liquid is directed to a clarifier tank in which it is separated from the biomass which is recycled in part to the reactor.

5. A method according to any preceding claim, characterized in that a denitrification step is provided in a denitrification tank situated upstream from the purification reactor and in which at least a portion of the liquid taken from the biological reactor is recycled together with at least a portion of the sludge collected in the clarifier tank.

## Patentansprüche

1. Verfahren zur biologischen Reinigung von stark mit organischen oder mineralischen Verunreinigungen belasteten Flüssigkeiten mit Hilfe von Bakterien in Gegenwart eines festen Trägers, an dem die Bakterien anhaften können, dadurch gekennzeichnet, daß es die folgenden Schritte aufweist:
(A) kontinuierliches Einleiten der zu reinigenden, Flokken enthaltenden Flüssigkeit, die keiner vorherigen Filtration unterzogen wurde, in einen Reaktor in aerobem Milieu, in dem ein fester Träger mit einer Korngröße zwischen 1 und 5 mm und einer Dichte zwischen 1,01 und 1,3 g/cm³ durch Einblasen von Gas in Gegenwart von Bakterien in einen aufgewirbelten Zustand versetzt wurde, wobei die für den Stoffwechsel der Bakterien notwendigen Bedingungen beachtet werden, und in dem Reaktor gleichzeitig Stickstoffbakterien, die autotroph sind und auf dem Träger anhaften, und Kohlenstoffbakterien, die heterotroph sind und sich im wesentlichen auf den Flocken in der Flüssigkeit fortpflanzen, verwendet werden; und
(B) kontinuierliches Abziehen der behandelten Flüssigkeit aus dem Behälter nach einer ausreichenden Aufenthaltszeit für eine wirkungsvolle Reinigung der in der zu reinigenden Flüssigkeit enthaltenen Verunreinigungen.

2. Biologisches Reinigungsverfahren nach Anspruch 1, welches aerobe Bakterien verwendet, dadurch gekennzeichnet, daß man als Aufwirbelungsgas Luft verwendet, welche auch die für die Bakterien notwendigen aeroben Bedingungen liefert.

3. Verfahren nach Anspruch 1 oder 2, dadurch gekennzeichnet, daß die behandelte Flüssigkeit ein Becken zur Rückgewinnung des festen Trägers durchläuft, der in den Reaktor zurückgeführt wird.

4. Verfahren nach einem der vorherigen Ansprüche, dadurch gekennzeichnet, daß die behandelte Flüssigkeit in ein Klärbecken geleitet wird, in dem man die Biomasse abtrennt, die teilweise in den Reaktor zurückgeführt wird.

5. Verfahren nach einem der vorherigen Ansprüche, dadurch gekennzeichnet, daß eine Denitrifikationsstufe in einem Denitrifikationsbecken vorgesehen ist, das dem Reinigungsreaktor vorgeschaltet ist, und in das man zumindest teilweise die von dem biologischen Reaktor abgezogene Flüssigkeit und mindestens einen Teil der in dem Klärbecken anfallenden Schlämme zurückführt.
